# EUROPEAN PATENT SPECIFICATION

(11) **EP 4 615 680 B1**
(45) Date of publication and mention of the grant of the patent: **29.07.2026**
(21) Application number: 23798929.8
(22) Date of filing: 30.10.2023
(51) Int. Cl.: B29C 70/44, B29C 70/72, B29D 99/00, F03D 1/06, B29L 31/08

(54) **METHOD OF MANUFACTURING A ROTOR BLADE FOR WIND TURBINES**
VERFAHREN ZUR HERSTELLUNG EINES ROTORBLATTES FÜR EINE WINDKRAFTANLAGE
MÉTHODE DE FABRICATION D'UNE PALE DE ROTOR POUR ÉOLIENNE

(30) Priority: 10.11.2022 EP 22206740
(43) Date of publication of application: 17.09.2025
(73) Proprietor: FlowGen Development & Management AG, 6300 Zug (CH)
(72) Inventor: KÜSTER, Dirk, 6417 Sattel (CH)
(74) Representative: Schaad, Balass, Menzl & Partner AG
(86) International application number: PCT/EP2023/080182
(87) International publication number: WO 2024/099808

(56) References cited:
- CN-B- 113 104 210
- FR-A1- 3 121 474

## Description

The invention relates to a method of manufacturing a rotor blade for a wind turbine, more specifically a method of manufacturing a first half rotor blade shell, a second half rotor blade shell and a spacer forming a leading edge closure of the rotor blade designed to receive in an assembled state a leading edge of the first half rotor blade shell and on the opposed side a leading edge of the second half rotor blade shell.

To achieve manufacturing cost reduction of rotor blades, large scale production is a first solution to limit downtime while allowing purchasing cost reduction. Different manufacturing processes are available for mass production of rotor blades.

Resin transfer molding (RTM) is a well-known production process in which a reactive resin in the form of a resin-hardener mixture is injected into a closed mold, usually a two-part mold, in which dry fiber plies have been previously placed. In this process, the fiber plies are placed in the mold. The mold is then closed, and reactive resin is constantly injected via a sprue at an injection pressure of between 0.5 and 8 bar. The components of the resin system are mixed in advance in a pressure head. The fiber plies are thus impregnated with the resin. Excess resin escapes at vents. The resin is cured under holding pressure and with the vents closed. When the reactive resin has cured, the mold is opened, and the finished part is extracted from the mold. This process allows to obtain high performance structural parts by directly combining reinforcement in the form of fiber plies and matrix in the form of the reactive resin.

In high-pressure resin transfer molding (HP-RTM) the injection pressure can be increased to up to 200 bar. A fully cured composite part can be obtained in a time less than 10 minutes, depending on selected chemicals and on the process parameters. The high-pressure process allows a high throughput reducing manufacturing costs.

Compression molding using sheet molding compound (SMC) is another well-known production process that allows high volume production and cost-effective manufacturing typically with reduced scrap. Weight reduction of manufactured parts is also achieved due to lower dimensional requirements.

FR 3 121 474 A1 discloses a method of manufacturing a rotor blade for a wind turbine comprising the step of or manufacturing a blade comprising the steps of producing a spar comprising a blade root portion configured to be mounted on a hub of a rotor of the turbomachine, an airfoil portion and a stilt portion, wherein the airfoil portion comprises a body connected to the blade root portion and two branches extending radially from the body. Then, the method comprises the step of producing a structural reinforcement extending from the blade root portion to the body of the airfoil portion, the structural reinforcement being secured to the blade root portion and configured to form a force path distinct from the stilt portion in an event of rupture of the spar within the stilt portion. Further, the method comprises the step of producing a fibrous reinforcement of a structure with aerodynamic profile; the step of inserting the spar into the fibrous reinforcement so A23717WOEP/02.07.2025/ that the blade root portion is located outside the first fibrous reinforcement and so that the airfoil portion is located inside the first fibrous reinforcement; and then the step of placing the assembly formed by the first fibrous reinforcement in a mold and injecting a matrix into the assembly so as to obtain the blade.

It is an object of the present invention to provide for a method of manufacturing a rotor blade for a wind turbine that allows the combination of different production processes selected to optimize manufacturing of each component of the rotor blade, thereby reducing manufacturing costs at the level of the components of the rotor blade.

This objective is met according to the present invention by providing a method of manufacturing a rotor blade for a wind turbine according to claim **1.** Further advantageous embodiments of the invention are subject of the dependent claims.

A method of manufacturing a rotor blade for a wind turbine is disclosed, comprising the step of providing plies of fibrous material and stacking the plies in a first mold for a first half rotor blade shell and in a second mold for a second half rotor blade shell, the first mold and the second mold being designed for use in a high-pressure resin transfer molding process. The first half rotor blade shell and the second half rotor blade shell include each a plurality of circular passages arranged inboard and designed to mate with a plurality of bushings for fastening the rotor blade to a hub of the wind turbine. Preferably, the plies are made of dry fibrous material to produce homogeneous laminates with a minimum of defects. Typically, plies of triaxial non-crimped fabric in carbon fiber can be used. Recycled carbon fiber can also be used as an ecological alternative. Preferably, two circular passages are provided to receive each time a bushing.

Further, the method comprises the step of injecting a resin by high-pressure resin transfer molding process in the first mold and in the second mold to bond the plies and manufacture the first half rotor blade shell and the second half rotor blade shell.

The method comprises also the step of providing the plurality of bushings each formed as a solid cylindrical sleeve having a wall protrusion extending radially outwards from an outer surface of the sleeve. The presence of a wall protrusion extending radially is advantageous to increase the circumferential contact surface with the material surrounding each bushing and improves the fixation of the bushing in an axial direction of the bushing. Preferably, the plurality of bushings are made of steel to provide for the required mechanical resistance, wherein the bushings can have undergone an electrostatic coating to limit the risk of corrosion.

In addition, the method comprises the step of manufacturing and providing a spacer. The spacer comprises a rotor blade root, preferably solid, defining a reference plane and including the plurality of bushings arranged with their axial direction perpendicular to the reference plane. The wall protrusion of the plurality of bushings is each time embedded in the rotor blade root during manufacturing to ensure their anchoring in the rotor blade root. Advantageously, the method eliminates a step of fixation of the bushings, for example with an adhesive agent, after manufacturing the rotor blade root.

In a known manner, the rotor blade comprises the rotor blade root for fastening the rotor blade to a rotor shaft or to a hub of the wind turbine. The hub is typically attached to the rotor shaft. In operation, the rotor shaft or its axis of rotation is at least approximately aligned in the direction of the incoming wind.

Further, the spacer comprises a leading edge closure and a rotor blade tip, the leading edge closure extending from the rotor blade root outboard into the rotor blade tip facing away from the rotor blade root.

The rotor blade root and the leading edge closure have a receiving region designed to receive on one side a leading edge of the first half rotor blade shell and on the opposed side a leading edge of the second half rotor blade shell to form a leading edge of the rotor blade. The spacer forms a supporting structure for the first and the second half rotor blade shell and delimits with the first and the second half rotor blade shell a hollow body of the rotor blade. The spacer is designed to maintain at a distance a trailing edge of the first and the second half rotor blade shell to form the trailing edge of the rotor blade.

Preferably, the receiving region is formed with a profile on the one side complementary to the leading edge of the first half rotor blade shell and on the opposed side complementary to the leading edge of the second half rotor blade shell. This arrangement forms a seamless transition from the leading edge closure to the first and second half rotor blade shells.

After preferably cleaning contact surfaces of the first half rotor blade shell and the second half rotor blade shell, the method comprises the step of positioning the first half rotor blade shell and the second half rotor blade shell in the receiving region with the plurality of circular passages mounted around the plurality of bushings. Further, the step of bonding the first half rotor blade shell, the second half rotor blade shell and the spacer to form the leading edge of the rotor blade and bonding the first half rotor blade shell and the second half rotor blade shell to form a trailing edge of the rotor blade is performed.

As a further step, a plurality of washers having an internal diameter corresponding to the external diameter of the plurality of bushings are provided to mount a washer at each end of the bushings. To mount the washer, it is inserted at each end of the bushing and a pair of washers can be maintained at each end of the bushing by a bolt used to fasten the rotor blade to the rotor shaft or to the hub of the wind turbine.

Advantageously, the method allows the use of the high-pressure resin transfer molding process for the manufacturing of the first half rotor blade shell and the second half rotor blade shell, for which the process is particularly well adapted in terms of costs. Further, the leading edge closure of the rotor blade can be manufactured by a different method that is better adapted for that type of part. Therefore, the method optimizes cost by allowing the use of different manufacturing processes for the adapter and the first as well as the second half rotor blade shell, each process being independently optimized. Further, this method allows scalability of manufacturing by using production processes that are adequate for small as well as large production quantities. In addition, the bushings are integrated to the rotor blade during the manufacturing process of the rotor blade itself such that an additional step is not necessary anymore after molding the rotor blade to fix the bushings.

In a preferred embodiment, the thickness of the spacer is designed to allow the bushings to protrude on each side of the spacer at least by a height corresponding to the thickness of the second half rotor blade shell and the first half rotor blade shell, respectively, and by a height corresponding to less than the combined thickness of the second half rotor blade shell with the washer and the combined thickness of first half rotor blade shell with the washer, respectively. This arrangement forms a seamless transition from the bushings to the first and second half rotor blade shells.

In a preferred embodiment, the spacer is manufactured by compression molding using sheet molding compound, preferably of glass-fiber reinforced polyester. This process allows cost optimization for manufacturing the spacer. Further, in the absence of an impregnation step of the fibrous material, a wide range of dry fibrous material can be used like recycled fibrous material or fibrous material coming from renewable sources, what would not be the case with resin transfer molding.

In a preferred embodiment, the spacer is manufactured by injection molding, preferably of thermoplastic foam. This process allows also cost optimization for manufacturing the spacer while thermoplastic foam allows weight reduction of the spacer.

In a preferred embodiment, the step of manufacturing the spacer by molding comprises the step of manufacturing the spacer in a plurality of spacer segments and the step of assembling the plurality of spacer segments to form the spacer. Preferably, the spacer is manufactured in two to six spacer segments. Most preferably, four to six spacer segments are provided. Advantageously, this step allows to reduce tooling size.

In a preferred embodiment, the spacer segments are assembled by form fit connection. Such a connection allows an assembly of the spacer segments to form the spacer without using mechanical elements or adhesive agents, what limits the manufacturing costs.

In a preferred embodiment, the trailing edge of the first half rotor blade shell and the trailing edge of the second half rotor blade shell are assembled directly with each other to form a trailing edge of the blade. This embodiment allows a further weight reduction because the trailing edge is free from spacer.

In a preferred embodiment, the trailing edge of the first half rotor blade shell and the trailing edge of the second half rotor blade shell are milled to size before being assembled. The wall thickness of the trailing edge of the first and second half rotor blade is thinner than the wall thickness in the rest of the first and second half rotor blade and is designed such that, in the assembled state, both trailing edges assembled directly to each other form the trailing edge of the rotor blade without a portion of the spacer necessary at the trailing edge. Milling the trailing edge of the first and second half rotor blade to size, i.e. to give them their final form for the assembly as the rotor blade, allows removing irregularities at the edges of the first and second half rotor blade before bonding them.

In a preferred embodiment, the rotor blade tip forms a tip closure of the rotor blade, the tip closure being arranged at an outboard end of the second half rotor blade shell and at an outboard end of the first half rotor blade shell. Outboard defines a position or direction farther from the center and inboard defines the opposed direction.

Preferably, the rotor blade tip has a tip receiving region designed to receive on one side a tip edge of the first half rotor blade shell and on the opposed side a tip edge of the second half rotor blade shell to form a tip edge of the rotor blade.

Preferably, the rotor blade tip has a profile in the form of a wedge tapering in the direction from the leading edge to the trailing edge to follow the shape of the outboard end of the second half rotor blade shell and at an outboard end of the first half rotor blade shell.

Preferably, the tip receiving region is formed with a profile on the one side complementary to the tip edge of the first half rotor blade shell and on the opposed side complementary to the tip edge of the second half rotor blade shell. This arrangement forms a seamless transition from the tip closure to the first and second half rotor blade shells.

In a preferred embodiment, the rotor blade root forms a trailing edge closure arranged at an inboard end of the second half rotor blade shell and at an inboard end of the first half rotor blade shell.

In a preferred embodiment, the wall protrusion of the plurality of bushings is in the form of at least one rib arranged at mid-height of the bushings. This embodiment provides for a strong anchoring of the bushings in the rotor blade root.

Bolts made of glass fiber reinforced or carbon fiber reinforced thermoplastic materials can be inserted in the washers and bushings for fastening the rotor blade to the rotor shaft. The use of such materials reduces weight and cost while avoiding corrosion problems.

### Description of the figures

The present invention will now be described by way of an example with reference to the accompanying drawings in which:
Fig. 1 shows a perspective view of the components of the rotor blade before assembly;
Fig. 2 shows a top view of the rotor blade in the assembled state;
Fig. 3 shows a cross section of the rotor blade along the section A-A illustrated in Fig. 2;
Fig. 4 shows a cross section of the rotor blade along the section C-C illustrated in Fig. 2;
Fig. 5 shows a cross section of the rotor blade along the section D-D illustrated in Fig. 2;
Fig. 6 shows in a cross sectional view a portion of a rotor blade root after the step of manufacturing the rotor blade root with an embedded bushing;
Fig. 7 shows in a cross sectional view the same portion as of Fig. 6 after a next step with a first half rotor blade shell and a second half rotor blade shell accommodated around the bushing; and
Fig. 8 shows in a cross sectional view the same portion as of Fig. 6 after a next step with washers arranged around the bushing.

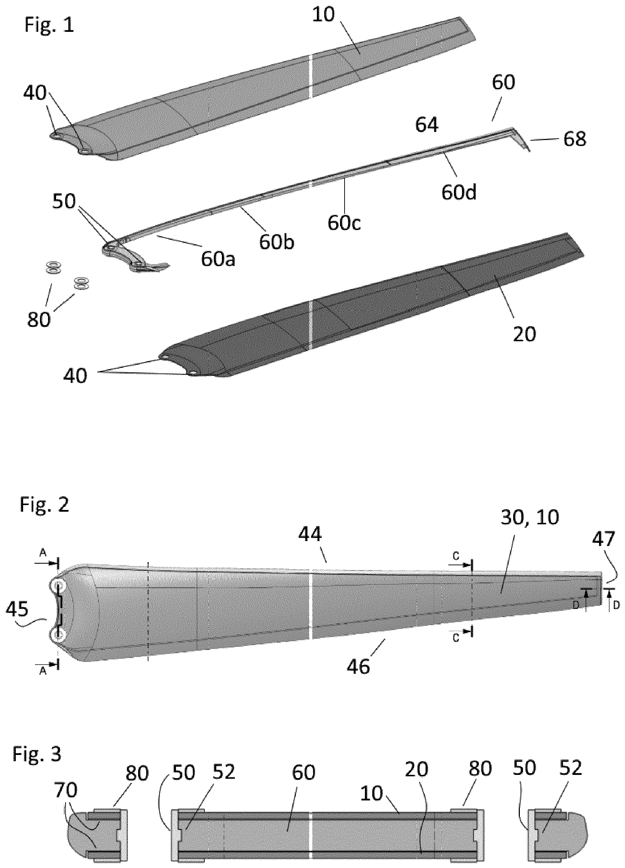

Fig. 1 shows a first half rotor blade shell 10 and a second half rotor blade shell 20 manufactured according to the invention for a rotor blade 30 for a wind turbine.

The method of manufacturing the rotor blade comprises the step of providing plies of fibrous material in the form of triaxial non-crimped fabric in carbon fiber and stacking the plies in a first mold for a first half rotor blade shell and in a second mold for a second half rotor blade shell, the first mold and the second mold being designed for use in a high-pressure resin transfer molding process. Further, the method comprises the step of injecting a resin by high-pressure resin transfer molding process in the first mold and in the second mold to bond the plies and manufacture the first half rotor blade shell 10 and the second half rotor blade shell 20.

The first half rotor blade shell 10 and the second half rotor blade shell 20 include each a plurality of circular passages 40, here each time two circular passages. The circular passages 40 are arranged inboard to mate with a plurality of bushings 50 for fastening the rotor blade to a hub of the wind turbine.

The rotor blade comprises a rotor blade root 42 for fastening the rotor blade 10 to a not represented rotor shaft or to a hub of the wind turbine. The hub is typically attached to the rotor shaft. In operation, the rotor shaft or its axis of rotation is at least approximately aligned in the direction of the incoming wind. The rotor blade has a leading edge 44 and a trailing edge 46 extending from an inboard end 45 to an outboard end 47.

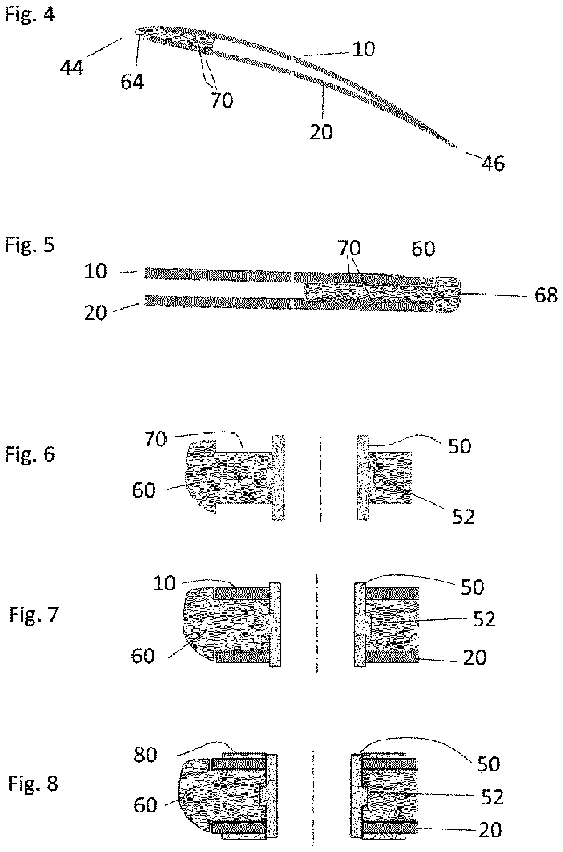

The method comprises also the step of providing the plurality of bushings 50 made of steel each formed as a solid cylindrical sleeve having a wall protrusion 52 extending radially outwards from an outer surface of the sleeve as illustrated in Fig. 6. The wall protrusion 52 is in the form of at least one rib arranged at mid-height of the bushing. The rib provides for a strong anchoring of the bushing in the rotor blade root 42.

In addition, the method comprises the step of manufacturing and providing a spacer 60. The spacer 60 comprises the rotor blade root 42 defining a reference plane and including the plurality of bushings 50 arranged with their axial direction perpendicular to the reference plane. The rotor blade root 42 is formed as a solid inboard end of the rotor blade extending from the leading edge 44 to the trailing edge 46.

The wall protrusion 52 of the plurality of bushings is each time embedded in the rotor blade root during manufacturing to ensure their anchoring in the rotor blade root 42.

Further, the spacer comprises a leading edge closure 64 of the rotor blade extending from the rotor blade root 42 outboard into a rotor blade tip 68 facing away from the rotor blade root.

As shown in Fig. 3, 4 and 5, the spacer 60 has a receiving region 70 designed to receive on one side the first half rotor blade shell 10 and on the opposed side the second half rotor blade shell 20 to form the rotor blade. The receiving region extends over the rotor blade root 42, the leading closure 64 and the rotor blade tip 68. The receiving region is formed with a profile on the one side complementary to the leading edge of the first half rotor blade shell and on the opposed side complementary to the leading edge of the second half rotor blade shell. This arrangement forms a seamless transition from the spacer to the first and second half rotor blade shells.

After cleaning contact surfaces of the first half rotor blade shell and the second half rotor blade shell, the method comprises the step of positioning the first half rotor blade shell 10 and the second half rotor blade shell 20 in the receiving region 70 with the plurality of circular passages 40 mounted around the plurality of bushings 50 as shown in Fig. 4 and Fig. 7. Then, the step of bonding the first half rotor blade shell, the second half rotor blade shell and the spacer 60 is performed to form the leading 44 and trailing edge 46 of the rotor blade as well as the inboard end 45 and the outboard end 47.

In a previous step, the trailing edge of the first half rotor blade shell and the trailing edge of the second half rotor blade shell have been milled to size before being bonded directly to each other to form the trailing edge as shown in Fig. 4.

Fig. 4 shows the receiving region 70 of the leading edge closure 64 in which on one side a leading edge of the first half rotor blade shell 10 and on the opposed side a leading edge of the second half rotor blade shell 20 are accommodated to form the leading edge 44 of the rotor blade.

Fig. 5 shows the receiving region 70 of the rotor blade tip 68 in which an outboard end of the first half rotor blade shell 10 and on the opposed side an outboard end of the second half rotor blade shell 20 are accommodated to form the outboard end of the rotor blade.

As a further step, a plurality of washers 80 having an internal diameter corresponding each time to the external diameter of the plurality of bushings 50 are provided and a washer is mounted at each end of the bushings as shown in Fig. 8. The thickness of the spacer 60 is designed to allow the bushings 50 to protrude on each side of the spacer at least by a height corresponding to the thickness of the second half rotor blade shell 10 and the first half rotor blade shell 20, respectively, and by a height corresponding to less than the combined thickness of the second half rotor blade shell with the washer and the combined thickness of first half rotor blade shell with the washer, respectively, as shown in Fig. 6, Fig. 7 and Fig. 8.

The spacer 60 is manufactured by compression molding using sheet molding compound of glass-fiber reinforced polyester, wherein the spacer 60 is manufactured in a plurality of, here four, spacer segments 60a, 60b 60c and 60d illustrated in Fig. 2 and the plurality of spacer segments are assembled by form fit connection to form the spacer 60. A first spacer segment 60a comprises the rotor blade root 42 with an adjoining portion of the leading edge closure 64. A second 60b spacer segment adjoining the first spacer segment and a third spacer segment 60c adjoining the second spacer segment form each a section of the leading edge closure 64. A fourth spacer segment 60d adjoining the third spacer segment comprises an outboard section of the leading edge closure 64 and the rotor blade tip 68.

The rotor blade tip 68 has a profile in the form of a wedge tapering in the direction from the leading edge to the trailing edge to follow the shape of the outboard end of the second half rotor blade shell and at an outboard end of the first half rotor blade shell.

### List of reference signs

| | |
|---|---|
| first half rotor blade shell | 10 |
| second half rotor blade shell | 20 |
| rotor blade | 30 |

| | |
|---|---|
| circular passages | 40 |
| rotor blade root | 42 |
| leading edge | 44 |
| inboard end | 45 |
| trailing edge | 46 |
| outboard end | 47 |
| bushings | 50 |
| wall protrusion | 52 |
| spacer | 60 |
| spacer segments | 60a, 60b 60c and 60d |
| leading edge closure | 64 |
| rotor blade tip | 68 |
| receiving region | 70 |
| washers | 80 |

## Claims

1. Method of manufacturing a rotor blade (30) for a wind turbine comprising the steps of
a) providing plies of fibrous material and stacking the plies in a first mold for a first half rotor blade shell (10) and in a second mold for a second half rotor blade shell (20), the first mold and the second mold being designed for use in a high-pressure resin transfer molding process, the first half rotor blade shell (10) and the second half rotor blade shell (20) including each a plurality of circular passages (40) arranged inboard and designed to mate with a plurality of bushings (50) for fastening the rotor blade to a hub of the wind turbine;
b) injecting a resin by high-pressure resin transfer molding process in the first mold and in the second mold to bond the plies and manufacture the first half rotor blade shell and the second half rotor blade shell;
c) providing the plurality of bushings (50) each formed as a solid cylindrical sleeve having a wall protrusion (52) extending radially outwards from an outer surface of the sleeve;
d) manufacturing a spacer (60), the spacer comprising a rotor blade root (42) defining a reference plane and including the plurality of bushings (50) arranged perpendicular to the reference plane, the spacer (60) comprising further a leading edge closure (64) and a rotor blade tip (68), the leading edge closure extending from the rotor blade root outboard into the rotor blade tip facing away from the rotor blade root, the rotor blade tip (68) and the leading edge closure (64) having a receiving region (70) designed to receive on one side a leading edge of the first half rotor blade shell and on the opposed side a leading edge of the second half rotor blade shell to form a leading edge (44) of the rotor blade; and
e) positioning the first half rotor blade shell (10) and the second half rotor blade shell (20) in the receiving region (70) with the plurality of circular passages (40) mounted around the plurality of bushings (50) and bonding the first half rotor blade shell, the second half rotor blade shell and the spacer (60) to form the leading edge (44) of the rotor blade (30), and the first half rotor blade shell and the second half rotor blade shell to form a trailing edge (46) of the rotor blade;
f) providing a plurality of washers (80) having an internal diameter corresponding to the external diameter of the plurality of bushings (50) to mount a washer at each end of the bushings.

2. Method according to claim 1, **characterized in that** the thickness of the spacer (60) is designed to allow the bushings (50) to protrude on each side of the spacer at least by a height corresponding to the thickness of the second half rotor blade shell (20) and the first half rotor blade shell (10), respectively, and by a height corresponding to less than the combined thickness of the second half rotor blade shell with the washer and the combined thickness of first half rotor blade shell with the washer, respectively.

3. Method according to claim 1 or 2, **characterized in that** the spacer (60) is manufactured by compression molding using sheet molding compound, preferably of glass-fibre reinforced polyester.

4. Method according to claim 1 or 2, **characterized in that** the spacer (60) is manufactured by injection molding, preferably of thermoplastic foam.

5. Method according to any one of claims 1 to 4, **characterized in that** the step of manufacturing the spacer (60) by molding comprises the step of manufacturing the spacer in a plurality of spacer segments (60a, 60b, 60c, 60d) and the step of assembling the plurality of spacer segments to form the spacer.

6. Method according to claim 5, **characterized in that** the spacer segments (60a, 60b, 60c, 60d) are assembled by form fit connection.

7. Method according to any one of claims 1 to 6, **characterized in that** a trailing edge of the first half rotor blade shell (10) and a trailing edge of the second half rotor blade shell (20) are assembled directly with each other to form the trailing edge (46) of the blade.

8. Method according to claim 7, **characterized in that** the trailing edge of the first half rotor blade shell and the trailing edge of the second half rotor blade shell are milled to size before being assembled.

9. Method according to any one of claims 1 to 8, **characterized in that** the rotor blade tip (68) forms a tip closure of the rotor blade, the tip closure being arranged at an outboard end of the second half rotor blade shell (20) and at an outboard end of the first half rotor blade shell (10).

10. Method according to any one of claims 1 to 9, **characterized in that** the rotor blade root (42) forms a trailing edge closure arranged at an inboard end of the second half rotor blade shell and at an inboard end of the first half rotor blade shell.

11. Method according to any one of claims 1 to 10, **characterized in that** the wall protrusion (52) of the plurality of bushings (50) is in the form of at least one rib arranged at mid-height of the bushings.

## Patentansprüche

1. Verfahren zur Herstellung eines Rotorblatts (30) für eine Windkraftanlage, umfassend die folgenden Schritte:
a) Bereitstellen von Lagen aus Fasermaterial und Aufschichten der Lagen in einer ersten Form für eine erste Rotorblatt-Halbschale (10) und in einer zweiten Form für eine zweite Rotorblatt-Halbschale (20), wobei die erste Form und die zweite Form für die Verwendung in einem Hochdruck-Harztransferformverfahren ausgelegt sind, wobei die erste Rotorblatt-Halbschale (10) und die zweite Rotorblatt-Halbschale (20) jeweils eine Vielzahl von kreisförmigen Durchgängen (40) aufweisen, die innenseitig angeordnet und so ausgelegt sind, dass sie mit einer Vielzahl von Buchsen (50) zum Befestigen des Rotorblatts an einer Nabe der Windkraftanlage zusammenpassen;
b) Einspritzen eines Harzes mittels eines Hochdruck-Harztransferformverfahrens in die erste Form und in die zweite Form, um die Lagen zu verbinden und die erste Rotorblatt-Halbschale sowie die zweite Rotorblatt-Halbschale herzustellen;
c) Bereitstellen der Vielzahl von Buchsen (50), die jeweils als kontinuierliche zylindrische Hülse ausgebildet sind und einen Wandvorsprung (52) aufweisen, der sich von einer Außenfläche der Hülse radial nach außen erstreckt;
d) Herstellen eines Abstandhalters (60), wobei der Abstandhalter eine Rotorblattwurzel (42) umfasst, die eine Bezugsebene definiert und die Vielzahl von Buchsen (50) enthält, die senkrecht zur Bezugsebene angeordnet sind, wobei der Abstandhalter (60) ferner einen Vorderkantenverschluss (64) und eine Rotorblattspitze (68) umfasst, wobei sich der Vorderkantenverschluss von der Rotorblattwurzel nach außen in die Rotorblattspitze erstreckt, die von der Rotorblattwurzel weg zeigt, wobei die Rotorblattspitze (68) und der Vorderkantenverschluss (64) einen Aufnahmebereich (70) aufweisen, der so ausgelegt ist, dass er auf einer Seite eine Vorderkante der ersten Rotorblatt-Halbschale und auf der gegenüberliegenden Seite eine Vorderkante der zweiten Rotorblatt-Halbschale aufnimmt, um eine Vorderkante (44) des Rotorblatts zu bilden; und
e) Positionieren der ersten Rotorblatt-Halbschale (10) und der zweiten Rotorblatt-Halbschale (20) im Aufnahmebereich (70), wobei die Vielzahl von kreisförmigen Durchgängen (40) um die Vielzahl von Buchsen (50) herum angeordnet ist, und Verbinden der ersten Rotorblatt-Halbschale, der zweiten Rotorblatt-Halbschale und des Abstandhalters (60) miteinander, um die Vorderkante (44) des Rotorblatts (30) zu bilden, sowie Verbinden der ersten Rotorblatt-Halbschale und der zweiten Rotorblatt-Halbschale miteinander, um eine Hinterkante (46) des Rotorblatts zu bilden;
f) Bereitstellen einer Vielzahl von Unterlegscheiben (80) mit einem Innendurchmesser, der dem Außendurchmesser der Vielzahl von Buchsen (50) entspricht, um an jedem Ende der Buchsen eine Unterlegscheibe anzubringen.

2. Verfahren nach Anspruch 1, **dadurch gekennzeichnet, dass** die Dicke des Abstandhalters (60) so ausgelegt ist, dass die Buchsen (50) auf jeder Seite des Abstandhalters mindestens um eine Höhe, die der Dicke der zweiten Rotorblatt-Halbschale (20) beziehungsweise der ersten Rotorblatt-Halbschale (10) entspricht, und um eine Höhe, die jeweils weniger als die kombinierte Dicke der zweiten Rotorblatt-Halbschale mit der Unterlegscheibe beziehungsweise der kombinierten Dicke der ersten Rotorblatt-Halbschale mit der Unterlegscheibe beträgt.

3. Verfahren nach Anspruch 1 oder 2, **dadurch gekennzeichnet, dass** der Abstandhalter (60) durch Formpressen unter Verwendung einer Formmasse, vorzugsweise aus glasfaserverstärktem Polyester, hergestellt wird.

4. Verfahren nach Anspruch 1 oder 2, **dadurch gekennzeichnet, dass** der Abstandhalter (60) durch Spritzgießen, vorzugsweise aus thermoplastischem Schaumstoff, hergestellt wird.

5. Verfahren nach einem der Ansprüche 1 bis 4, **dadurch gekennzeichnet, dass** der Schritt des Herstellens des Abstandshalters (60) durch Formen den Schritt des Herstellens des Abstandshalters in einer Vielzahl von Abstandshalter-Segmenten (60a, 60b, 60c, 60d) und den Schritt des Zusammenfügens der Vielzahl von Abstandshalter-Segmenten zur Bildung des Abstandshalters umfasst.

6. Verfahren nach Anspruch 5, **dadurch gekennzeichnet, dass** die Abstandshalter-Segmente (60a, 60b, 60c, 60d) durch Formschluss verbunden werden.

7. Verfahren nach einem der Ansprüche 1 bis 6, **dadurch gekennzeichnet, dass** eine Hinterkante der ersten Rotorblatt-Halbschale (10) und eine Hinterkante der zweiten Rotorblatt-Halbschale (20) direkt miteinander verbunden werden, um die Hinterkante (46) des Rotorblattes zu bilden.

8. Verfahren nach Anspruch 7, **dadurch gekennzeichnet, dass** die Hinterkante der ersten Rotorblatt-Halbschale und die Hinterkante der zweiten Rotorblatt-Halbschale vor dem Zusammenbau auf Maß gefräst werden.

9. Verfahren nach einem der Ansprüche 1 bis 8, **dadurch gekennzeichnet, dass** die Rotorblattspitze (68) einen Spitzenverschluss des Rotorblatts bildet, wobei der Spitzenverschluss an einem äußeren Ende der zweiten Rotorblatt-Halbschale (20) und an einem äußeren Ende der ersten Rotorblatt-Halbschale (10) angeordnet ist.

10. Verfahren nach einem der Ansprüche 1 bis 9, **dadurch gekennzeichnet, dass** die Rotorblattwurzel (42) einen Hinterkantenverschluss bildet, der an einem innerseitigen Ende der zweiten Rotorblatt-Halbschale und an einem innerseitigen Ende der ersten Rotorblatt-Halbschale angeordnet ist.

11. Verfahren nach einem der Ansprüche 1 bis 10, **dadurch gekennzeichnet, dass** der Wandvorsprung (52) der Vielzahl von Buchsen (50) die Form mindestens einer Rippe aufweist, die in der Mitte der Höhe der Buchsen angeordnet ist.

## Revendications

1. Procédé de fabrication d'une pale de rotor (30) pour une éolienne, comprenant les étapes
a) fournir des nappes de matériau fibreux et les empiler dans un premier moule destiné à une première demi-coque de pale de rotor (10) et dans un deuxième moule destiné à une deuxième demi-coque de pale de rotor (20), le premier moule et le second moule étant conçus pour être utilisés dans un procédé de moulage par transfert de résine à haute pression, la première demi-coque de pale de rotor (10) et la seconde demi-coque de pale de rotor (20) comprenant chacune une pluralité de passages circulaires (40) disposés vers l'intérieur et conçus pour s'accoupler avec une pluralité de bagues (50) destinées à fixer la pale de rotor à un moyeu de l'éolienne;
b) injecter une résine par un procédé de moulage par transfert de résine sous haute pression dans le premier moule et dans le second moule afin de lier les couches et de fabriquer la première moitié de coque de pale de rotor et la seconde moitié de coque de pale de rotor;
c) fournir la pluralité de bagues (50), chacune étant formée comme un manchon cylindrique continu comportant une saillie de paroi (52) s'étendant radialement vers l'extérieur à partir d'une surface extérieure du manchon;
d) fabriquer une entretoise (60), l'entretoise comprenant une emplanture (42) de pale de rotor définissant un plan de référence et incluant la pluralité de bagues (50) disposées perpendiculairement au plan de référence, l'entretoise (60) comprenant en outre une fermeture de bord d'attaque (64) et une extrémité de pale de rotor (68), la fermeture de bord d'attaque s'étendant depuis l'emplanture de la pale de rotor vers l'extérieur jusqu'à l'extrémité de pale de rotor à l'opposé de l'emplanture de la pale de rotor, l'extrémité de pale de rotor (68) et la fermeture de bord d'attaque (64) comportant une zone de réception (70) conçue pour recevoir, d'un côté, un bord d'attaque de la première demi-coque de pale de rotor et, du côté opposé, un bord d'attaque de la seconde demi-coque de pale de rotor afin de former un bord d'attaque (44) de la pale de rotor; et
e) positionner la première moitié de coque de pale de rotor (10) et la seconde moitié de coque de pale de rotor (20) dans la zone de réception (70) avec la pluralité de passages circulaires (40) montés autour de la pluralité de bagues (50) et assembler par collage la première moitié de coque de pale de rotor, la seconde moitié de coque de pale de rotor et l'entretoise (60) pour former le bord d'attaque (44) de la pale de rotor (30), et la première moitié de coque de pale de rotor et la seconde moitié de coque de pale de rotor pour former un bord de fuite (46) de la pale de rotor ;
f) fournir une pluralité de rondelles (80) ayant un diamètre interne correspondant au diamètre externe de la pluralité de bagues (50) afin de monter une rondelle à chaque extrémité des bagues.

2. Procédé selon la revendication 1, **caractérisé en ce que** l'épaisseur de l'entretoise (60) est conçue pour permettre aux bagues (50) de dépasser de chaque côté de l'entretoise d'au moins une hauteur correspondant à l'épaisseur de la seconde moitié de coque de pale de rotor (20) et de la première moitié de coque de pale de rotor (10), respectivement, et d'une hauteur correspondant à une valeur inférieure à l'épaisseur combinée de la deuxième demi-coque de pale de rotor avec la rondelle et à l'épaisseur combinée de la première demi-coque de pale de rotor avec la rondelle, respectivement.

3. Procédé selon la revendication 1 ou 2, **caractérisé en ce que** l'entretoise (60) est fabriquée par moulage par compression à partir d'un composé de moulage en feuille, de préférence en polyester renforcé de fibres de verre.

4. Procédé selon la revendication 1 ou 2, **caractérisé en ce que** l'entretoise (60) est fabriquée par moulage par injection, de préférence à partir d'une mousse thermoplastique.

5. Procédé selon l'une quelconque des revendications 1 à 4, **caractérisé en ce que** l'étape de fabrication de l'entretoise (60) par moulage comprend l'étape de fabrication de l'entretoise en une pluralité de segments d'entretoise (60a, 60b, 60c, 60d) et l'étape d'assemblage de la pluralité de segments d'entretoise pour former l'entretoise.

6. Procédé selon la revendication 5, **caractérisé en ce que** les segments d'entretoise (60a, 60b, 60c, 60d) sont assemblés par emboîtement.

7. Procédé selon l'une quelconque des revendications 1 à 6, **caractérisé en ce qu'**un bord de fuite de la première demi-coque de pale de rotor (10) et un bord de fuite de la deuxième demi-coque de pale de rotor (20) sont assemblés directement l'un à l'autre pour former le bord de fuite (46) de la pale.

8. Procédé selon la revendication 7, **caractérisé en ce que** le bord de fuite de la première moitié de coque de pale de rotor et le bord de fuite de la deuxième moitié de coque de pale de rotor sont fraisés à la cote avant d'être assemblés.

9. Procédé selon l'une quelconque des revendications 1 à 8, **caractérisé en ce que** l'extrémité de pale de rotor (68) forme une fermeture d'extrémité de la pale de rotor, la fermeture d'extrémité étant disposée à une extrémité extérieure de la deuxième moitié de coque de pale de rotor (20) et à une extrémité extérieure de la première moitié de coque de pale de rotor (10).

10. Procédé selon l'une quelconque des revendications 1 à 9, **caractérisé en ce que** l'emplanture de la pale de rotor (42) forme une fermeture de bord de fuite disposée à une extrémité intérieure de la seconde moitié de la coque de pale de rotor et à une extrémité intérieure de la première moitié de la coque de pale de rotor.

11. Procédé selon l'une quelconque des revendications 1 à 10, **caractérisé en ce que** la saillie de paroi (52) de la pluralité de bagues (50) se présente sous la forme d'au moins une nervure disposée à mi-hauteur des bagues.
